Europäisches Patentamt

European Patent Office

Office européen des brevets

(19)

(11) Veröffentlichungsnummer : **0 208 057**
**B1**

(12) **EUROPÄISCHE PATENTSCHRIFT**

(45) Veröffentlichungstag der Patentschrift :
**17.08.88**

(51) Int. Cl.⁴ : **H 01 M 2/10**

(21) Anmeldenummer : **86103521.0**

(22) Anmeldetag : **15.03.86**

(54) **Tragevorrichtung für einen Akkumulator.**

(30) Priorität : **31.05.85 DE 3519511**

(43) Veröffentlichungstag der Anmeldung :
**14.01.87 Patentblatt 87/03**

(45) Bekanntmachung des Hinweises auf die Patenterteilung : **17.08.88 Patentblatt 88/33**

(84) Benannte Vertragsstaaten :
**AT DE FR GB IT SE**

(56) Entgegenhaltungen :
**DE-A- 2 104 389**
**DE-B- 2 741 145**
**FR-A- 2 186 394**
**GB-A-    23 485**
**GB-A- 1 290 147**

(73) Patentinhaber : **VARTA Batterie Aktiengesellschaft**
**Am Leineufer 51**
**D-3000 Hannover 21 (DE)**

(72) Erfinder : **Gummelt, Klaus**
**Schulstrasse 2a**
**D-3008 Garbsen 1 (DE)**

(74) Vertreter : **Kaiser, Dieter Ralf, Dipl.-Ing.**
**Gundelhardtstrasse 72**
**D-6233 Kelkheim/Ts. (DE)**

## Beschreibung

Die Erfindung betrifft eine Tragevorrichtung für einen Akkumulator mit am Akkumulator herausziehbar angebrachten Traggriffen, welche in der Tragstellung bei herausgezogenem Griff gegen angeformte Anschläge im Bereich des Oberrandes des Akkumulatorkastens gehalten sind.

Während zum Heben und Transportieren leichterer Akkumulatoren im allgemeinen wulstartige Verstärkungen des oberen Kastenrandes, insbesondere an den Schmalseiten, der greifenden Hand genügenden Halt bieten, sind schwere Batteriebehälter mit z. T. aufwendigen Tragevorrichtungen versehen. Ihre unterschiedlichen Konstruktionen sind jedoch von dem gemeinsamen Bestreben her bestimmt, die Traggriffe so anzuordnen, daß sie bei Nichtgebrauch möglichst vollständig in den Batterieumriß integriert sind, um die Stapelfähigkeit der Batterien nicht zu behindern.

Typische Tragevorrichtungen für Batteriebehälter nach dem eingangs formulierten Gattungsbegriff sind dem deutschen Gebrauchsmuster 77 12 738 oder der DE-AS-1 246 064 entnehmbar. Im ersten Fall handelt es sich um U-förmig gebogene Drahtbügel, welche dank an den beiden Schenkeln und an deren Verbindungssteg vorgesehener Biegestellen leicht durch die Bohrungen eines Tragansatzes hindurchsteckbar sind, danach jedoch durch Geradebiegen des Verbindungssteges mit einer gewissen Vorspannung an den Innenseiten der Bohrungen anliegen und nicht mehr verloren gehen können, indem aufgrund der Vorspannung zwei um 90 ° abgewinkelte Drahtstümpfe, in welche die U Schenkel auslaufen, außerstande gesetzt sind, die Bohrungen des Tragansatzes beim Hochziehen des Drahtbügels entgegen der Einführungsrichtung zu passieren. Im zweiten Fall ist ein ähnlicher Drahtbügel in an den Stirnseiten des Batteriekastens angebrachte offene Führungen eingesetzt, die seine vertikale Bewegbarkeit durch obere und untere Anschläge begrenzen.

Beide bekannten Traggriffe sind durch die besondere Art ihrer Führungen vor einem unbeabsichtigten Verkanten, bei dem der als Handgriff dienende Verbindungssteg in Schräglage gegen die Ebene des Kastenrandes gerät, nicht ausreichend geschützt. Wegen seiner begrenzten Dicke schneidet der Drahtbügel unvermeidbar in die Hand ein. Einen weiteren Nachteil bildet die Korrosionsanfälligkeit des Drahtgriffes.

Der Erfindung liegt daher die Aufgabe zugrunde, eine Tragevorrichtung für Akkumulatoren anzugeben, die unter Wahrung der bekannten Integration in den Batterieumriß noch rationeller gefertigt werden kann, die besonders montagefreundlich ist und beim Hin- und Herbewegen zwischen Tragstellung und Ruhelage einer exakten Führung unterliegt.

Die Aufgabe wird erfindungsgemäß mit den im kennzeichnenden Teil des Anspruchs 1 angegebenen Maßnahmen gelöst.

In seiner allgemeinen Ausführungsform stellt der erfindungsgemäße Traggriff ein flaches, einstückiges Spritzteil aus Kunststoff, beispielsweise aus Polypropylen dar, dessen oberer Bereich durch eine der zufassenden Hand angepaßte Materialaussparung als eigentlicher Handgriff ausgebildet ist. Eine günstige Ausführung des Traggriffs weist zwei Führungsleisten auf, welche mit dem Handgriff als Brücke die Schenkel eines U bilden.

Die nähere Beschreibung sei anhand einer Figur durchgeführt.

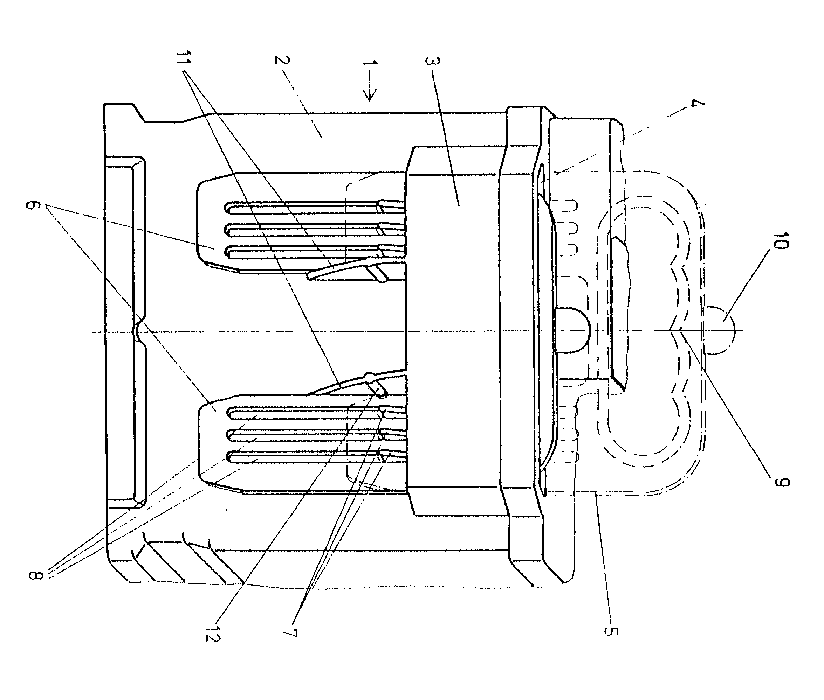

Die Figur zeigt die Stirnseite 2 eines Blockkastens 1 mit einem erkerartigen Vorsprung 3 des Kastenrandes, der sich weitgehend über die gesamte Breite des Blockkastens erstreckt und sich um die etwa 4 fache Höhe des Kastenrandes nach unten fortsetzt. Durch einen Führungsschlitz 4 im erkerartigen Vorsprung sind die geschlitzten Führungsleisten 6 des erfindungsgemäßen Traggriffes 5 hindurchsteckbar, wobei sie unmittelbar an der Stirnwand des Blockkastens entlanggleiten. Die Enden der Führungsleisten überwinden während des Einschubs Vorsprünge 7 mit vorzugsweise hammerförmigem Profil, welche der Kastenwand unterhalb des erkerartigen Vorsprunges angeformt sind, indem die Flexibilität ihres zähharten Kunststoffmaterials ein beschränktes Ausweichen senkrecht zur Ebene des Führungsschlitzes gestattet, bis die Vorsprünge in die Längsschlitze 8 der Führungsleisten eingreifen können und als Führungsnasen für die exakte Ausrichtung des Traggriffes bei der fortgesetzten Einsteckbewegung sorgen. Die erreichte Endstellung des Traggriffes (Nichtgebrauch) ist in der Figur durch ausgezogene Linien dargestellt.

Das Herausziehen des Handgriffes 9 aus seiner nahezu vollständigen Versenkung im Nichtgebrauchszustand wird durch eine hervorstehende Zunge 10 erleichtert. Die Tragstellung ist erreicht, sobald die unteren Enden der Längsschlitze in den Führungsleisten von unten kommend an die Vorsprünge 7, welche in dieser Richtung wie Sperrklinken fungieren, anschlagen und eine tragfähige Verhakung bilden. Dieser Zustand ist in der Figur durch die strichpunktierten Linien wiedergegeben.

Eine zusätzliche und dadurch besonders sichere Führung wird dem erfindungsgemäßen Traggriff durch die der Unterseite des erkerartigen Vorsprungs und der Kastenwand angespritzten Führungsstege 11 verliehen. Die seitliche Distanz dieser Führungsstege läßt sich in Grenzen variieren. Ihr gegenseitiger Abstand kann ggf. so groß gewählt werden, daß die Führungsleisten zweckmäßig zu einer einzigen, breiten Leiste zusammengefaßt werden, welche sich zwischen den Führungsstegen bewegt. Entsprechend sind dann die Vorsprünge 7 in den mittleren Bereich der Kastenwand verlegt. Der Tragriff erhält auf diese Weise eine T-förmige Gestalt.

Ein Vorteil dieser Ausführungsform der Erfindung kommt in dem Fall zu Geltung, wenn der Einbau der Batterie in ein Kraftfahrzeug mittel Robotern erfolgen soll, deren Greifarme den Batteriekasten an besonders leicht zugänglichen Stellen erfassen müssen. Als solche bieten sich hier die freigehaltenen Ecken des erkerartigen Vorsprungs an.

Weitere Vorteile der erfindungsgemäßen Tragevorrichtung liegen — materialbedingt — in der schlechten Säurehaftung und zum anderen in einer Flexibilität neben hoher Formstabilität begründet, die es beispielsweise gestattet, den Akkumulator am herausgezogenen Traggriff seitwärts aus einem Regal herauszuziehen, wobei der den eigentlichen Handgriff 9 bildende Teil über den Rand des Führungsschlitzes 4 als Knickkante elastisch in Zugrichtung abknickt.

Schließlich macht die definierte Lage am Blockkasten den Traggriff gemäß der Erfindung für eine maschinelle Anbringung im Rahmen einer automatisierten Fertigung besonders geeignet.

Durch die Rastnocken 12 wird der Griff im eingeschobenen Zustand fixiert, so daß er auch bei starken Erschütterungen in dieser Stellung verbleibt und nur gegen einen merkbaren Widerstand herausgezogen werden kann.

**Patentansprüche**

1. Tragevorrichtung für einen Akkumulator mit am Akkumulator herausziehbar angebrachten Traggriffen, welche in der Tragstellung bei herausgezogenem Griff gegen angeformte Anschläge im Bereich des Oberrandes des Akkumulatorkastens gehalten sind, dadurch gekennzeichnet, daß an den Handgriff (9) zumindest eine mit Längsschlitzen (8) versehene Führungsleiste (6) angeformt ist, die durch an gegenüberliegenden Seiten des Akkumulators vorgesehene Führungsschlitze (4) hindurchsteckbar ist, daß den Wänden des Akkumulatorkastens unterhalb der Führungsschlitze Vorsprünge (7) angeformt sind, welche während des Verschiebens der Führungsleisten Führungsnasen für die Längsschlitze (8) bilden, und daß die Führungsleisten (6) bei herausgezogenem Griff durch die unteren Enden ihrer Längsschlitze mit den Vorsprüngen (7) verhakt sind.

2. Tragevorrichtung nach Anspruch 1, dadurch gekennzeichnet, daß der Tragegriff mit den längsgeschlitzten Führungsleisten (6) in der Form eines flachen U gebildet ist.

3. Tragevorrichtung nach Anspruch 1, dadurch gekennzeichnet, daß der Tragegriff mit der längsgeschlitzten Führungsleiste (6) in der Form eines flachen T ausgebildet ist.

4. Tragevorrichtung nach einem der Ansprüche 2 oder 3, dadurch gekennzeichnet, daß der Kastenwand Führungsstege (11) für die Führungsleiste(n) (6) angeformt sind.

**Claims**

1. Carrying device for an accumulator having carrying handles attached extractably to the accumulator, which are retained against integrally-shaped stops in the region of the top rim of the accumulator box when the handle is extracted in the carrying position, characterized in that at least one guide strip (6) provided with longitudinal slots (8) is shaped integrally on the handle (9) and is insertable through guide slots (4) provided on opposite sides of the accumulator, in that projections (7), which are shaped integrally on the walls of the accumulator box beneath the guide slots form guide lugs for the longitudinal slots (8) during the sliding of the guide strips, and in that the guide strips (6) are hooked by the bottom ends of their longitudinal slots to the projections (7) when the handle is extracted.

2. Carrying device according to Claim 1, characterized in that the carrying handle with the longitudinally slotted guide strips (6) is formed in the shape of a flat U.

3. Carrying device according to Claim 1, characterized in that the carrying handle with the longitudinally slotted guide strip (6) is constructed in the form of a flat T.

4. Carrying device according to either of Claims 2 and 3, characterized in that guide webs (11) for the guide strip(s) (6) are integrally shaped on the box wall.

**Revendications**

1. Dispositif pour le transport d'un accumulateur, avec des poignées de transport, susceptibles d'être sorties, rapportées sur l'accumulateur et qui, dans la position de transport, lorsqu'elles sont sorties, sont maintenues contre des butées formées au voisinage du bord supérieur du bac de l'accumulateur, dispositif caractérisé en ce que sur la poignée (9) est formée au moins une barrette de guidage (6) munie de fentes longitudinales (8), barrettes qui sont susceptibles d'être introduites à travers des fentes de guidage (4) prévues sur les côtés opposés de l'accumulateur, des saillies (7) étant formées sous ces fentes de guidage sur les parois du bac de l'accumulateur, ces saillies constituant, pendant le coulissement des barrettes de guidage, des taquets de guidage pour les fentes longitudinales (8) et les barrettes de guidage (6) étant accrochées aux saillies (7) par les extrémités inférieures de leurs fentes longitudinales lorsque la poignée est sortie.

2. Dispositif selon la revendication 1, caractérisé en ce que la poignée de transport, avec les barrettes de guidage (6) fendues longitudinalement, revêt la forme d'un U plat.

3. Dispositif selon la revendication 1, caractérisé en ce que la poignée de transport, avec les barrettes de guidage (6) fendues longitudinalement, revêt la forme d'un T plat.

4. Dispositif selon une des revendications 2 ou 3, caractérisé en ce que, sur la paroi du bac, sont formées des nervures de guidage (11) pour la barrette ou les barrettes de guidage (6).